# EUROPEAN PATENT SPECIFICATION

(11) **EP 4 573 000 B1**
(45) Date of publication and mention of the grant of the patent: **30.09.2026**
(21) Application number: 23822405.9
(22) Date of filing: 15.12.2023
(51) Int. Cl.: B62M 6/45, B62M 6/55, B62M 11/04, B62M 25/00, B62M 25/08, B62M 11/14, B62M 11/16

(54) **DRIVE SYSTEMS FOR HUMAN POWERED VEHICLES**
ANTRIEBSSYSTEME FÜR DURCH MENSCHENKRAFT ANGETRIEBENE FAHRZEUGE
SYSTÈMES D'ENTRAÎNEMENT POUR VÉHICULES À PROPULSION HUMAINE

(30) Priority: 16.12.2022 NL 2033743; 31.07.2023 NL 2035507
(43) Date of publication of application: 25.06.2025
(73) Proprietor: Classified Cycling BV, 2060 Antwerpen (BE)
(72) Inventor: VAN DRUTEN, Roëll Marie, 2060 Antwerpen (BE)
(74) Representative: V.O.
(86) International application number: PCT/EP2023/086155
(87) International publication number: WO 2024/126825

(56) References cited:
- EP-A1- 3 696 070
- WO-A1-2022/154668
- DE-A1- 102020 132 627
- DE-A1- 102021 201 794
- US-A1- 2017 001 687

## Description

### FIELD

The invention relates to a drive systems for human powered vehicles, such as bicycles.

### BACKGROUND

Drive systems for human powered vehicles, such as bicycles, are known. Such drive systems are known to have a transmission system having a plurality of different selectable transmission ratios. Such drive system can e.g. include a chainring mounted to a crank axle, for driving via a chain one of a plurality of sprockets mounted to a wheel axle for providing a plurality of different selectable transmission ratios. A drive system can include an internally geared hub assembly, e.g. driven via a chain or belt, providing a plurality of different selectable transmission ratios. A drive system can include a crank assembly providing a plurality of different selectable transmission ratios, for e.g. driving a chain or belt.

When shifting from one transmission ratio to another, it is preferred that such shifting is executed smoothly. Some drive systems are known to sometimes experience difficulties shifting from one transmission ratio to another under certain circumstances. For instance, some drive systems have difficulties shifting under load, while other drive systems may have difficulties shifting at low rotational speeds.

WO2022/154668A1 describes a system and method for operating a pedally propelled vehicle gear system, comprising a multi-speed gear configured to provide varying gear ratios between a gear input element and a gear output element, wherein the method comprises receiving a shift control signal indicating that a gear shift should be performed, providing a boost control signal to the motor to run at a boost torque for a boost torque time period, providing a dip control signal to the motor to run at a dip torque for a dip torque time period, wherein the boost torque is higher than the dip torque. WO 2022/154668 A1 discloses all of the features of the preamble of claim 1.

### SUMMARY

According to an aspect is provided a drive system for a human powered vehicle, comprising an input of the drive system, and an output of the drive system. The drive system comprises a transmission system between the input and the output, wherein the transmission system has a plurality of different selectable transmission ratios, and includes one or more clutches for shifting from one of the transmission ratios to another. The transmission system can comprise one or more transmission axles. The drive system comprises an electric motor, connected to the drive system. The drive system comprises a controller configured to receive a shift command requesting shifting from one of the transmission ratios to another, receive a signal representative of a torque and/or speed of the crank axle, in response to receiving the shift command, when a torque and/or speed of the input is below a predetermined threshold, power the electric motor to drive the input of the drive system, and control the one or more clutches for shifting from the one of the transmission ratios to the other.

A crank axle forms the input of the drive system for receiving human driving force and a front sprocket forms the output of the drive system, or a rear sprocket forms an input of the drive system for receiving human driving force and a hub shell forms the output of the drive system.

More specifically, a drive system for a human powered vehicle is provided, comprising a crank axle forming an input of the drive system for receiving human driving force and a front sprocket forming an output of the drive system, or a rear sprocket forming an input of the drive system for receiving human driving force. The drive system comprises a transmission system between the input and the output, wherein the transmission system has a plurality of different selectable transmission ratios, and includes one or more clutches for shifting from one of the transmission ratios to another. The transmission system has an input which can be connectable to the input of the drive system. The transmission system has an output which can be connectable to the output of the drive system. The transmission system can comprise one or more transmission axles. The drive system comprises an electric motor, connected to the drive system. The electric motor can be configured for driving, e.g. assisting in driving, part of the drive system. The drive system comprises a controller configured to receive a shift command requesting shifting from one of the transmission ratios to another. The controller is configured to receive a signal representative of a torque and/or speed of the crank axle and/or rear sprocket. The controller is configured to, in response to receiving the shift command, when a torque and/or speed of the crank axle and/or rear sprocket is below a predetermined threshold, power the electric motor, and control the one or more clutches for shifting from the one of the transmission ratios to the other. For instance, when the crank axle forms the input of the drive system, the controller can be configured to, in response to receiving the shift command, when a torque and/or speed of the crank axle is below a predetermined threshold, power the electric motor, and control the one or more clutches for shifting from the one of the transmission ratios to the other. For instance, when the rear sprocket forms the input of the drive system, the controller can be configured to, in response to receiving the shift command, when a torque and/or speed of the rear sprocket is below a predetermined threshold, power the electric motor, and control the one or more clutches for shifting from the one of the transmission ratios to the other. The electric motor can drive the input of the transmission system and/or the output of the transmission system for providing sufficient rotation of the input of the transmission system relative to the output of the transmission system for efficiently shifting from one of the transmission ratios to another.

In the drive system it may be that, for efficiently shifting, the drive system may require the input of the transmission system to rotate relative to the output of the transmission system. In view thereof, the transmission system including one or more clutches for shifting from one of the transmission ratios to another may benefit from having a torque and/or speed of the input of the transmission system, or e.g. the crank axle or the rear sprocket, be higher than the predetermined threshold for efficient shifting from one of the transmission ratios to another. Hence, the controller powering the electric motor in response to receiving the shift command when a torque and/or speed of the crank axle and/or rear sprocket is below a predetermined threshold, can aid in efficient shifting. The electric motor can drive the input of the transmission system and/or the output of the transmission system for providing sufficient rotation of the input of the transmission system relative to the output of the transmission system for efficiently shifting from one of the transmission ratios to another.

The signal representative of a torque and/or speed of the crank axle and/or rear sprocket being below the predetermined threshold can be representative of a coasting or near-coasting situation, or a standstill or near-standstill situation, where a rider does not rotate the crank axle, or at least rotates the crank axle at a torque and/or speed below the predetermined threshold. Rotating the crank axle at a torque and/or speed below the predetermined threshold may cause difficulties in shifting from one transmission ratio to another, which can be relieved by powering the electric motor as described herein.

The signal representative of a torque and/or speed of the crank axle and/or rear spocket can be obtained at various locations in the vehicle. The signal representative of a torque and/or speed of the crank axle and/or rear sprocket, can e.g. be obtained by determining a signal representative of a torque and or speed of one or more of: a crank arm, the crank axle, a transmission axle, a front sprocket, a rear sprocket, a chain, a drive belt, a cardan, or the like. In view of standstill or near-standstill, the signal representative of a torque and/or speed of the crank axle and/or rear sprocket, can e.g. be obtained by determining a signal representative of a torque and or speed of a wheel, or a vehicle speed.

According to an aspect is provided a drive system for a human powered vehicle. The drive system comprises a crank axle forming an input of the drive system for receiving human driving force. The drive system comprises a front sprocket forming an output of the drive system. The front sprocket can be arranged for receiving a chain. Such front sprocket is also sometimes referred to as a chainring. The front sprocket can be arranged for receiving a belt. Such front sprocket is also sometimes referred to as a pulley. The front sprocket can be arranged for driving a cardan drive. The drive system further comprises a transmission system between the input and the output. The transmission system has an input which can be connectable to the input of the drive system. The transmission system has an output which can be connectable to the output of the drive system. The transmission system has a plurality of different selectable transmission ratios. The transmission can include one or more transmission axles. The transmission system includes one or more clutches for shifting from one of the transmission ratios to another. The drive system includes an electric motor, connected to the transmission system. The drive system further includes a controller. The controller is configured to receive a shift command requesting shifting from one of the transmission ratios to another. The shift command can, e.g. wiredly or wirelessly, be received by a receiver of the controller. The shift command can be transmitted to the controller by a shifter. The shifter can e.g. include one or more shift buttons or levers. The controller is configured to receive a signal representative of a torque and/or speed, i.e. rotation speed, of the crank axle. Thereto, the drive system can include a torque sensor and/or a crank axle rotation speed sensor. The controller is configured to, in response to receiving the shift command, when a torque and/or speed, i.e. rotation speed, of the crank axle is below a predetermined threshold, power the electric motor, and control the one or more clutches for shifting from the one of the transmission ratios to the other. The electric motor can drive the input of the transmission system and/or the output of the transmission system for providing sufficient rotation of the input of the transmission system relative to the output of the transmission system for efficiently shifting from one of the transmission ratios to another.

It will be appreciated that the electric motor can be powered a predetermined time period before controlling the one or more clutches for shifting from the one of the transmission ratios to the other. Alternatively, it is possible that the electric motor powered a predetermined time period after controlling the one or more clutches for shifting from the one of the transmission ratios to the other. It is also possible to power the electric motor simultaneously with controlling the one or more clutches for shifting from the one of the transmission ratios to the other.

The transmission system including one or more clutches for shifting from one of the transmission ratios to another may require rotation of at least one of an input of the transmission system or an output of the transmission system for efficiently shifting from one of the transmission ratios to another. In the drive system having the transmission system between the crank axle and the front sprocket, it may be that while moving the driven wheel does not drive the front sprocket in rotation, e.g. in view of a freewheel between a wheel hub and a rear sprocket. Therefore, for efficiently shifting, the drive system may require the input of the transmission system to rotate. In view thereof, the transmission system including one or more clutches for shifting from one of the transmission ratios to another may benefit from having a torque and/or speed of the input of the transmission system, or e.g. the crank axle, be higher than the predetermined threshold for efficient shifting from one of the transmission ratios to another. Hence, the controller powering the electric motor in response to receiving the shift command when a torque and/or speed of the crank axle is below a predetermined threshold, can aid in efficient shifting.

The electric motor can drive the input of the transmission system or the output of the transmission system for providing sufficient rotation of the input of the transmission system relative to the output of the transmission system for efficiently shifting from one of the transmission ratios to another.

Optionally, the controller is configured to receive a signal representative of a speed of the vehicle, e.g. from a wheel speed sensor or vehicle speed sensor. The controller can be configured to not power the electric motor when the vehicle speed is below a predetermined vehicle speed threshold. Refraining from powering the motor when the vehicle speed is below a predetermined vehicle speed threshold can avoid thrusting the vehicle forward while the rider is not expecting such. The predetermined vehicle speed threshold can e.g. be 6 km/h, or for example 5, 4, 3, 2 or 1 km/h. Optionally, the controller is configured to override the instruction to power the electric motor in response to receiving the shift command when a torque and/or speed of the crank axle is below a predetermined threshold in case the vehicle speed is below the predetermined vehicle speed threshold.

Optionally, the controller is configured to control the power to the electric motor during the controlling of the one or more clutches to be at or below a first predetermined power threshold. The first predetermined power threshold can e.g. be 50 W, or for example 40, 30, 20 or 10 W. Optionally, the controller is configured to control the power to the electric motor during the controlling of the one or more clutches to be at or above a second predetermined power threshold. The second predetermined power threshold can e.g. be 10 W, or for example 20, 30, 40 or 50 W.

Optionally, the electric motor is primarily for supporting shifting. The electric motor can e.g. have a power of 50 W or less, such as 20 W or less.

Optionally, the electric motor is configured to drive the output, e.g. via the transmission system, to assist driving force. The electric motor can e.g. have a power of 250 W or more. In exemplary human powered vehicles, when the electric motor is powered, the crank axle is driven by the user. When the electric motor drives the output of the drive system to assist driving force, the controller can be configured to maintain power to the electric motor in response to receiving the shift command, when a torque and/or speed of the crank axle is below a predetermined threshold. Optionally, the controller is configured to maintain power to the electric motor at the present power level in response to receiving the shift command. Optionally, the controller is configured to maintain power to the electric motor at the present power level in response to receiving the shift command, when a torque and/or speed of the crank axle is below a predetermined threshold. Optionally, the controller is configured to set power to the electric motor to the first predetermined power threshold in response to receiving the shift command when the present power level is higher than the first predetermined power threshold. Optionally, the controller is configured to set power to the electric motor to the first predetermined power threshold in response to receiving the shift command, when a torque and/or speed of the crank axle is below a predetermined threshold and when the present power level is higher than the first predetermined power threshold. Optionally, the controller is configured to set power to the electric motor to the second predetermined power threshold in response to receiving the shift command when the present power level is lower than the second predetermined power threshold. Optionally, the controller is configured to set power to the electric motor to the second predetermined power threshold in response to receiving the shift command, when a torque and/or speed of the crank axle is below a predetermined threshold and when the present power level is lower than the second predetermined power threshold. The controller can be configured to not raise the power to the electric motor to the second predetermined power threshold when the vehicle speed is below the predetermined vehicle speed threshold.

Optionally, the drive system comprising an automatic shift command generator, configured to automatically generate a shift command and provide the shift command to the controller. The automatic shift command generator can be configured to automatically generate the shift command based on one or more of a current transmission ratio, a vehicle speed, vehicle acceleration, a crank torque and/or speed, driving power provided by a rider, cadence, heart rate, respiration rate, road incline, or the like. The automatic shift command generator can e.g. be configured to automatically generate a shift command to maintain the cadence within a predetermined cadence interval. The automatic shift command generator can e.g. be configured to automatically generate a shift command to maintain the driving power within a predetermined torque interval. The automatic shift command generator and the controller can be both part of a control unit or control system.

Optionally, the drive system comprises a freewheel clutch between the crank axle and an input of the transmission system and/or an input axle of the electric motor. Hence, powering the electric motor will not drive the crank axle, and optional associated cranks and/or pedals, in rotation.

Optionally, the drive system comprises a clutch for decoupling an output of the transmission system from a wheel. The wheel is a driven wheel when coupled. The clutch can e.g. be configured for decoupling an output of the transmission system from the front sprocket. The controller can then be configured to decouple the output of the transmission system from the wheel when powering the electric motor in response to receiving a shift command, when a torque and/or speed of the crank axle is below a, e.g. different, predetermined threshold. Hence, when a torque and/or speed of the crank axle is below a certain threshold, for instance when the speed of the crank axle is zero or close to zero, such as during coasting, the output of the transmission system can be decoupled from the wheel, so that any driving of the transmission system with the electric motor will not result in unexpected propelling of the vehicle. The controller can be configured to control the clutch to the coupled state after the shift has been completed. Hence, the clutch can prevent the vehicle being driven by the motor during a shift of the transmission system when the crank axle is not rotating or only rotating very slowly, e.g. when the vehicle is not moving or moving very slowly. Thus shifting can be enabled during standstill or, e.g. slow, coasting. During standstill or coasting the wheel being decoupled from the transmission system may not be noticed by a rider. Once the shift has been completed the wheel is again coupled to the transmission system, ready for use. The controller can be configured to control the clutch to the coupled state when the crank axle rotation speed is higher than a, e.g. different, predetermined threshold. Hence, in case the rider starts pedalling with the clutch in the uncoupled state, the controller can switch the clutch to the coupled state so as to provide expected resistance to pedalling to the user.

Optionally, the clutches of the transmission system are configured to shift under load. The clutches, or one or more of the clutches of the transmission system may for example be similar or identical to a clutch as described in WO2018/199757A2, WO20201085911A2, or WO2021/08043 1A1.

Optionally, a rotation axis of the front sprocket is laterally offset relative to an axis of the crank axle. Hence, the rotation axis of the front sprocket and the crank axle can be parallel and not coaxial.

Optionally, the electric motor is concentric with the crank axle. Alternatively, the electric motor can be offset relative to the crank axle.

Optionally, the transmission system includes a continuously variable transmission, CVT. The CVT can be configured to be operated at a plurality of different discrete transmission ratios. Alternatively, or additionally the transmission system can include a belt drive. Alternatively, or additionally, the transmission system can include a planetary gear set.

Optionally, the drive system includes a reduction transmission between the electric motor and the transmission system.

According to an aspect is provided a drive system for a human powered vehicle. The drive system comprises a rear sprocket forming an input of the drive system for receiving human driving force. The drive system comprises a hub shell forming an output of the drive system. The rear sprocket can be arranged for receiving a chain. The rear sprocket can be arranged for receiving a belt. Such rear sprocket is also sometimes referred to as a pulley. The rear sprocket can be arranged for being driven by a cardan drive. The rear sprocket can be driven by a front sprocket, such as a chain ring or pulley, e.g. via a chain, belt or cardan. The hub shell can be rotatable about a wheel axle. The hub shell can be configured for being mounted to a driven wheel of the vehicle. The hub shell can e.g. comprise spokes flanges for mounting the hub shell to a wheel rim via a plurality of spokes. The drive system further comprises a transmission system between the input and the output. The transmission system has an input which can be connectable to the input of the drive system. The transmission system has an output which can be connectable to the output of the drive system. The transmission system has a plurality of different selectable transmission ratios. The transmission system can have two different selectable transmission ratios. Preferably, the transmission system has more than two different selectable transmission ratios, such as 3, 4, 5, 6, 7, 8, 9, 10, 11 or 12 different selectable transmission ratios. Preferably, the drive system is free from a derailleur. The transmission system includes one or more clutches for shifting from one of the transmission ratios to another. The drive system includes an electric motor, connected to the transmission system. The drive system further includes a controller. The controller is configured to receive a shift command requesting shifting from one of the transmission ratios to another. The shift command can, e.g. wiredly or wirelessly, be received by a receiver of the controller. The shift command can be transmitted to the controller by a shifter. The shifter can e.g. include one or more shift buttons or levers. The controller is configured to receive a signal representative of a torque and/or rotation speed of the rear sprocket. The signal representative of a torque and/or rotation speed of the rear sprocket can comprise a signal representative of a torque and/or rotation speed of a front sprocket, such as a chain ring, pulley or cardan sprocket. The signal representative of a torque and/or speed of the rear sprocket can comprise a signal representative of a torque and/or speed of a chain, belt or cardan. The signal representative of a torque and/or rotation speed of the rear sprocket can comprise a signal representative of a torque and/or rotation speed of a crank axle. Thereto, the drive system can include a torque sensor and/or a rotation speed sensor. The controller is configured to, in response to receiving the shift command, when a torque and/or rotation speed of the rear sprocket is below a predetermined threshold, power the electric motor, and control the one or more clutches for shifting from the one of the transmission ratios to the other. The electric motor can drive the input of the transmission system and/or the output of the transmission system for providing sufficient rotation of the input of the transmission system relative to the output of the transmission system for efficiently shifting from one of the transmission ratios to another.

According to an aspect is provided a drive system for a human powered vehicle. The drive system comprises a crank axle forming an input of the drive system for receiving human driving force. The drive system comprises a hub shell forming an output of the drive system. The drive system comprises a rear sprocket forming an intermediate input of the drive system. The rear sprocket can be arranged for receiving a chain. The rear sprocket can be arranged for receiving a belt. Such rear sprocket is also sometimes referred to as a pulley. The rear sprocket can be arranged for being driven by a cardan drive. The rear sprocket can be driven by a front sprocket, such as a chain ring or pulley, e.g. via a chain, belt or cardan. The hub shell can be rotatable about a wheel axle. The hub shell can be configured for being mounted to a driven wheel of the vehicle. The hub shell can e.g. comprise spokes flanges for mounting the hub shell to a wheel rim via a plurality of spokes. The drive system further comprises a transmission system between the intermediate input and the output. The transmission system has an input which can be connectable to the intermediate input of the drive system. The transmission system has an output which can be connectable to the output of the drive system. The transmission system has a plurality of different selectable transmission ratios. The transmission system can have two different selectable transmission ratios. Preferably, the transmission system has more than two different selectable transmission ratios, such as 3, 4, 5, 6, 7, 8, 9, 10, 11 or 12 different selectable transmission ratios. Preferably, the drive system is free from a derailleur. The transmission system includes one or more clutches for shifting from one of the transmission ratios to another. The drive system includes an electric motor, connected to the transmission system, such as to a front sprocket, e.g. via the crank axle. The drive system further includes a controller. The controller is configured to receive a shift command requesting shifting from one of the transmission ratios to another. The shift command can, e.g. wiredly or wirelessly, be received by a receiver of the controller. The shift command can be transmitted to the controller by a shifter. The shifter can e.g. include one or more shift buttons or levers. The controller is configured to receive a signal representative of a torque and/or rotation speed of the rear sprocket. The signal representative of a torque and/or rotation speed of the rear sprocket can comprise a signal representative of a torque and/or rotation speed of a front sprocket, such as a chain ring, pulley or cardan sprocket. The signal representative of a torque and/or speed of the rear sprocket can comprise a signal representative of a torque and/or speed of a chain, belt or cardan. The signal representative of a torque and/or rotation speed of the rear sprocket can comprise a signal representative of a torque and/or rotation speed of a crank axle. Thereto, the drive system can include a torque sensor and/or a rotation speed sensor. The controller is configured to, in response to receiving the shift command, when a torque and/or rotation speed of the rear sprocket is below a predetermined threshold, power the electric motor, and control the one or more clutches for shifting from the one of the transmission ratios to the other.

It will be appreciated that the electric motor can be powered a predetermined time period before controlling the one or more clutches for shifting from the one of the transmission ratios to the other. Alternatively, it is possible that the electric motor powered a predetermined time period after controlling the one or more clutches for shifting from the one of the transmission ratios to the other. It is also possible to power the electric motor simultaneously with controlling the one or more clutches for shifting from the one of the transmission ratios to the other.

The signal representative of a torque and/or speed of the rear sprocket being below the predetermined threshold can be representative of a coasting or near-coasting situation, or a standstill or near-standstill situation. Rotating the rear sprocket at a torque and/or speed below the predetermined threshold may cause difficulties in shifting from one transmission ratio to another, which can be relieved by powering the electric motor as described herein.

The signal representative of a torque and/or speed of the rear sprocket can be obtained at various locations in the vehicle. The signal representative of a torque and/or speed of the rear sprocket, can e.g. be obtained by determining a signal representative of a torque and or speed of one or more of: a crank arm, the crank axle, a transmission axle, a front sprocket, the rear sprocket, a chain, a drive belt, a cardan, or the like. In view of standstill or near-standstill, the signal representative of a torque and/or speed of the rear sprocket, can e.g. be obtained by determining a signal representative of a torque and or speed of a wheel, or a vehicle speed.

The transmission system including one or more clutches for shifting from one of the transmission ratios to another may require rotation of at least one of an input of the transmission system or an output of the transmission system for efficiently shifting from one of the transmission ratios to another. In the drive system having the transmission system between the rear sprocket and the hub shell, it may be that while moving the driven wheel does not drive the rear sprocket in rotation, e.g. in view of a freewheel between a wheel hub and a rear sprocket. Therefore, for efficiently shifting, the drive system may require the input of the transmission system to rotate. In view thereof, the transmission system including one or more clutches for shifting from one of the transmission ratios to another may benefit from having a torque and/or speed of an input of the transmission system be higher than the predetermined threshold for efficient shifting from one of the transmission ratios to another. Hence, the controller powering the electric motor in response to receiving the shift command when a torque and/or speed of the rear sprocket is below a predetermined threshold, can aid in efficient shifting. The electric motor can drive the input of the transmission system or the output of the transmission system for providing sufficient rotation of the input of the transmission system relative to the output of the transmission system for efficiently shifting from one of the transmission ratios to another.

Optionally, the controller is configured to receive a signal representative of a speed of the vehicle, e.g. from a wheel speed sensor or vehicle speed sensor. The controller can be configured to not power the electric motor when the vehicle speed is below a predetermined vehicle speed threshold. Refraining from powering the motor when the vehicle speed is below a predetermined vehicle speed threshold can avoid thrusting the vehicle forward while the rider is not expecting such. The predetermined vehicle speed threshold can e.g. be 6 km/h, or for example 5, 4, 3, 2 or 1 km/h. Optionally, the controller is configured to override the instruction to power the electric motor in response to receiving the shift command when a torque and/or speed of the rear sprocket is below a predetermined threshold in case the vehicle speed is below the predetermined vehicle speed threshold.

Optionally, the controller is configured to control the power to the electric motor during the controlling of the one or more clutches to be at or below a first predetermined power threshold. The first predetermined power threshold can e.g. be 50 W, or for example 40, 30, 20 or 10 W. Optionally, the controller is configured to control the power to the electric motor during the controlling of the one or more clutches to be at or above a second predetermined power threshold. The second predetermined power threshold can e.g. be 10 W, or for example 20, 30, 40 or 50 W.

Optionally, the electric motor is primarily for supporting shifting. The electric motor can e.g. have a power of 50 W or less, such as 20 W or less.

Optionally, the electric motor is configured to drive the output, e.g. via the transmission system, to assist driving force. The electric motor can e.g. have a power of 250 W or more. The electric motor can be positioned at the crank of the vehicle, e.g. driving the transmission system via a chain, belt or cardan. The electric motor can be part of a crank assembly. The electric motor can be positioned at or near the driven wheel of the vehicle, such as the rear wheel of a bicycle. The electric motor can be positioned inside the hub shell, driving the input or the output of the transmission system. In exemplary human powered vehicles, when the electric motor is powered, the crank axle is driven by the user. When the electric motor drives the output of the drive system to assist driving force, the controller can be configured to maintain power to the electric motor in response to receiving the shift command, when a torque and/or speed of the rear sprocket is below a predetermined threshold. Optionally, the controller is configured to maintain power to the electric motor at the present power level in response to receiving the shift command. Optionally, the controller is configured to maintain power to the electric motor at the present power level in response to receiving the shift command, when a torque and/or speed of the crank axle is below a predetermined threshold. Optionally, the controller is configured to set power to the electric motor to the first predetermined power threshold in response to receiving the shift command when the present power level is higher than the first predetermined power threshold. Optionally, the controller is configured to set power to the electric motor to the first predetermined power threshold in response to receiving the shift command, when a torque and/or speed of the crank axle is below a predetermined threshold and when the present power level is higher than the first predetermined power threshold. Optionally, the controller is configured to set power to the electric motor to the second predetermined power threshold in response to receiving the shift command when the present power level is lower than the second predetermined power threshold. Optionally, the controller is configured to set power to the electric motor to the second predetermined power threshold in response to receiving the shift command, when a torque and/or speed of the crank axle is below a predetermined threshold and when the present power level is lower than the second predetermined power threshold. The controller can be configured to not raise the power to the electric motor to the second predetermined power threshold when the vehicle speed is below the predetermined vehicle speed threshold.

Optionally, the drive system comprises a freewheel clutch between the rear sprocket and an input of the transmission system. Optionally, the drive system comprises a freewheel clutch between the electric motor and an input or output of the transmission system. Hence, powering the electric motor will not drive the crank axle, and optional associated cranks and/or pedals, in rotation.

Optionally, the drive system comprises a clutch for decoupling an output of the transmission system from a wheel. The wheel is a driven wheel when coupled. The clutch can e.g. be configured for decoupling an output of the transmission system from the hub shell. The controller can then be configured to decouple the output of the transmission system from the wheel while powering the electric motor, when a torque and/or speed of the rear sprocket and/or crank axle is below a, e.g. different, predetermined threshold. Hence, when a torque and/or speed of the rear sprocket and/or crank axle is below a certain threshold, for instance when the speed of the rear sprocket and/or crank axle is zero or close to zero, such as during coasting, the output of the transmission system can be decoupled from the wheel, so that any driving of the transmission system with the electric motor will not result in unexpected propelling of the vehicle.

Optionally, the clutches of the transmission system are configured to shift under load. The clutches, or one or more of the clutches of the transmission system may for example be similar or identical to a clutch as described in WO2018/199757A2, WO20201085911A2, or WO2021/08043 1A1.

Optionally, the electric motor is concentric with the crank axle. Alternatively, the electric motor can be offset relative to the crank axle. Optionally, the electric motor is concentric with the wheel axle.

Optionally, the transmission system is housed in a wheel hub, such as in a hub shell.

Optionally, the transmission system includes a planetary gear set or a plurality of planetary gear sets.

Optionally, the transmission system includes a continuously variable transmission, CVT. The CVT can be configured to be operated at a plurality of different discrete transmission ratios. Alternatively, or additionally the transmission system can include a belt drive.

Optionally, the drive system includes a reduction transmission between the electric motor and the transmission system.

According to an aspect is provided a crank assembly for a human powered vehicle, such as a bicycle, comprising the drive system as described herein.

According to an aspect is provided a hub assembly for a human powered vehicle, such as a bicycle, comprising the drive system as described herein.

According to an aspect is provided a human powered vehicle, such as a bicycle, comprising the drive system as described herein or the crank assembly as described herein.

It will be appreciated that any one or more of the above aspects, features and options can be combined. It will be appreciated that any one of the options described in view of one of the aspects can be applied equally to any of the other aspects.

### BRIEF DESCRIPTION OF THE DRAWING

The invention will further be elucidated on the basis of exemplary examples which are represented in a drawing. The exemplary examples are given by way of non-limitative illustration. It is noted that the figures are only schematic representations of examples of the invention that are given by way of non-limiting example.

In the drawing:
Fig. 1 shows a schematic example of a drive system;
Fig. 2 shows a schematic example of a drive system;
Fig. 3 shows a schematic example of a drive system;
Fig. 4 shows a schematic example of a drive system;
Fig. 5 shows a schematic example of a drive system;
Fig. 6 shows a schematic example of a drive system;
   and
Figs. 7A and 7B show examples of bicycles.

### DETAILED DESCRIPTION

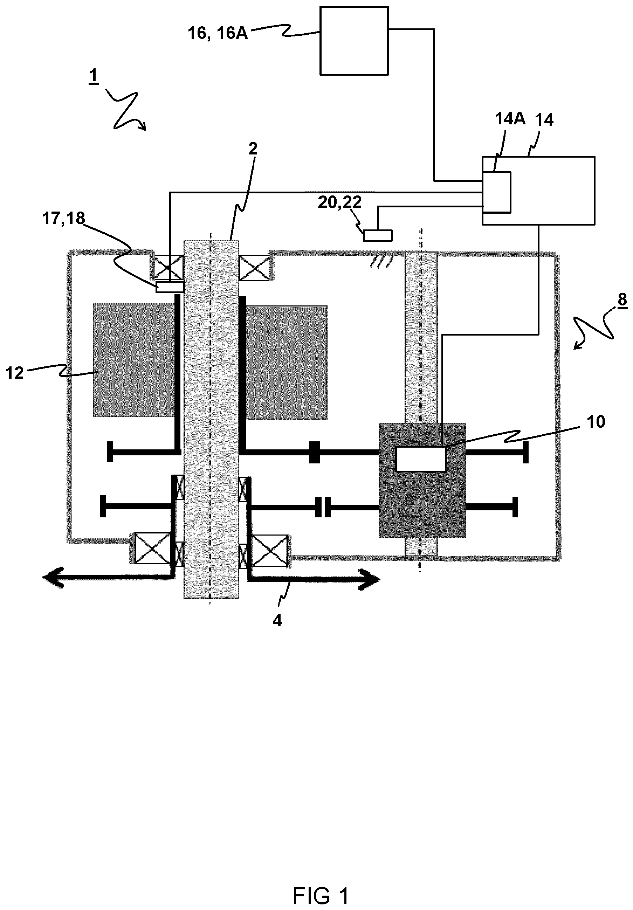

Figure 1 shows an example of a drive system 1 for a human powered vehicle, such as a bicycle. The drive system 1 comprises a crank axle 2 forming an input I of the drive system 1 for receiving human driving force. The drive system 1 comprises a front sprocket 4 forming an output O of the drive system 1. In this example, the front sprocket 4 is a chainring arranged for receiving a chain 6. Alternatively, the front sprocket can be a pulley arranged for receiving a belt, or the front sprocket can be arranged for driving a cardan drive.

In this example, the drive system 1 further comprises a transmission system 8 between the input I and the output O. The transmission system 8 has a plurality of different selectable transmission ratios. The transmission system 8 includes one or more clutches 10 for shifting from one of the transmission ratios to another. Here, the drive system 1 includes an electric motor 12. In this example, the electric motor is connected to the transmission system 8, here to an input A of the transmission system 8. The drive system further includes a controller 14. The controller 14 is configured to receive a shift command requesting shifting from one of the transmission ratios to another. The shift command can, e.g. wiredly or wirelessly, be received by a receiver 14A of the controller. The shift command can be transmitted to the controller 14 by a shifter 16. The shifter 16 can e.g. include one or more shift buttons or levers.

Optionally, the drive system comprising an automatic shift command generator 16A, configured to automatically generate a shift command and provide the shift command to the controller 14. The automatic shift command generator 16A can be configured to automatically generate the shift command based on one or more of a current transmission ratio, a vehicle speed, vehicle acceleration, a crank torque and/or speed, driving power provided by a rider, cadence, heart rate, respiration rate, road incline, or the like. The automatic shift command generator can e.g. be configured to automatically generate a shift command to maintain the cadence within a predetermined cadence interval. The automatic shift command generator can e.g. be configured to automatically generate a shift command to maintain the driving power within a predetermined torque interval. The automatic shift command generator and the controller can be both part of a control unit or control system.

In this example, the drive system 8 includes a torque sensor 17 and/or a crank axle rotation speed sensor 18. The controller 14 is configured to receive a signal representative of a torque and/or speed of the crank axle, here from one or both of the sensors 17, 18. In this example, the controller is configured to, in response to receiving the shift command, when a torque and/or speed of the crank axle 2 is below a predetermined threshold, power the electric motor 12, and control the one or more clutches 10 for shifting from the one of the transmission ratios to the other.

In this example, the controller 14 is configured to receive a signal representative of a speed of the vehicle, here from a wheel speed sensor 20 or vehicle speed sensor 22. The controller 14 is in this example configured to not power the electric motor 12 when the vehicle speed is below a predetermined vehicle speed threshold. Refraining from powering the motor when the vehicle speed is below a predetermined vehicle speed threshold can avoid thrusting the vehicle forward while the rider is not expecting such. The controller 14 can override the instruction to power the electric motor 12 in response to receiving the shift command when a torque and/or speed of the crank axle is below a predetermined threshold in case the vehicle speed is below the predetermined vehicle speed threshold.

Optionally, the controller is configured to control the power to the electric motor during the controlling of the one or more clutches to be at or below a first predetermined power threshold. The first predetermined power threshold can e.g. be 100W or e.g. 50 W, or for example 40, 30, 20 or 10 W. Optionally, the controller is configured to control the power to the electric motor during the controlling of the one or more clutches to be at or above a second predetermined power threshold. The second predetermined power threshold can e.g. be 10 W, or for example 20, 30, 40, 50 or 100 W.

In this example, the electric motor 12 is configured to drive the output O to assist driving force. Here the electric motor 12 drives the output O via the transmission system 8. Here, when the crank axle 2 is driven by the user, the electric motor 12 drives the output. Here, the controller 14 is configured to maintain power to the electric motor 12, when powered, in response to receiving the shift command, e.g. also when a torque and/or speed of the crank axle 2 is below a predetermined threshold. The controller 14 can be configured to maintain power to the electric motor 12 at the present power level in response to receiving the shift command. The controller 14 can be configured to set power to the electric motor 12 to the first predetermined power threshold in response to receiving the shift command, e.g. when the present power level is higher than the first predetermined power threshold, e.g. when a torque and/or speed of the crank axle is below a predetermined threshold. The controller 14 can be configured to set power to the electric motor 12 to the second predetermined power threshold in response to receiving the shift command, e.g. when the present power level is lower than the second predetermined power threshold, e.g. when a torque and/or speed of the crank axle is below a predetermined threshold. The controller 14 can be configured to not raise the power to the electric motor 12 to the second predetermined power threshold when the vehicle speed is below the predetermined vehicle speed threshold.

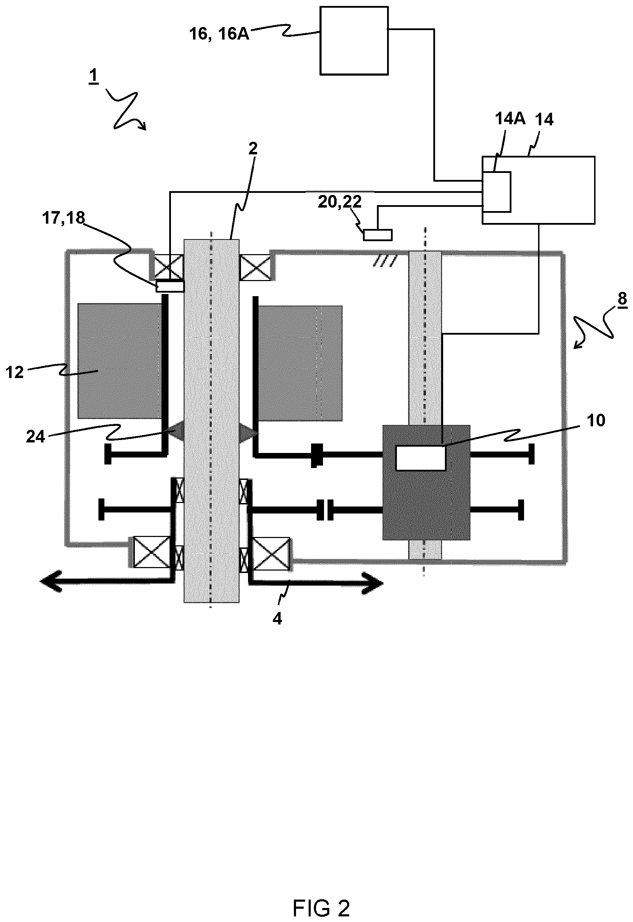

Figure 2 shows an example of a drive system 1 for a human powered vehicle similar to the drive system 1 shown in figure 1. In this example, the drive system 1 comprises a freewheel clutch 24 between the crank axle 2 and an input A of the transmission system 8 Here the freewheel clutch 24 is also between the crank axle 2 and a rotor 26 of the electric motor 12. Hence, powering the electric motor 12 will not drive the crank axle 2, and optional associated cranks and/or pedals, in rotation.

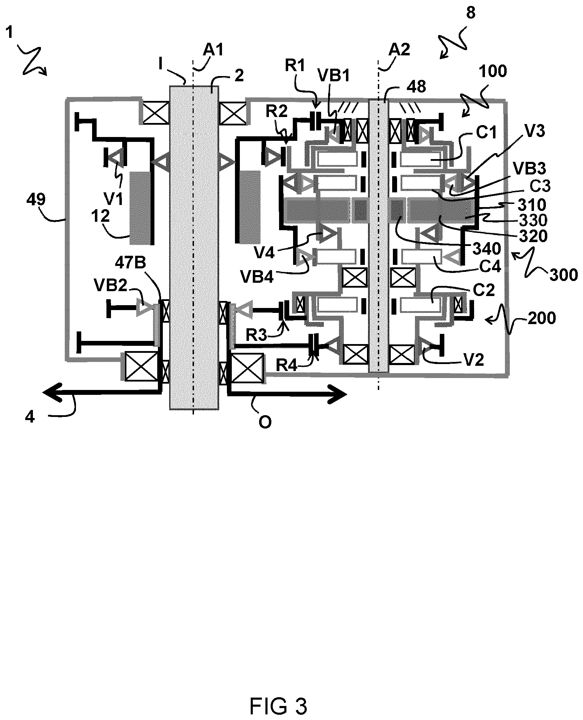

Figure 3 shows an example of a drive system 1. In this example, the transmission system 8 includes a first transmission 100, in this example operable according to two different transmission ratios. It will be appreciated that the first transmission 100 may alternatively be operable according to only one transmission ratio, or according to more than two transmission ratios. To shift between the two transmission ratios, the first transmission 100 includes a first actuatable clutch C1, in this example a load-shifting clutch. The first transmission 100, here, has two parallel transmission paths. Here, the first transmission path includes the first actuatable clutch C1. Also, here, the first transmission path includes a first cooperating gear pair R1, having a primary gear rotatable about the first axis A1 and a secondary gear rotatable about the second axis A2. In this example, the second transmission path includes a first freewheel V1 and a second cooperating gear pair R2 having a primary gear rotatable about the first axis A1 and a secondary gear rotatable about the second axis A2. Here, each primary gear of the first transmission 100 is mounted to the crank axle 2. The first freewheel V1 is in this example associated with the first axis A1. Each secondary gear of the first transmission 100 is, here, rotatable about the stationary second axle 48.

The second transmission 200 is in this example also operable according to two different transmission ratios. It will be appreciated that the second transmission 200 may alternatively be operable according to only one transmission ratio, or according to more than two transmission ratios. To shift between the two transmission ratios, the second transmission 200 includes a second actuatable clutch C2, in this example a load-shifting clutch. The second transmission 200, here, has two parallel transmission paths, namely a third transmission path and a fourth transmission path. Here, the third transmission path includes a second actuatable clutch C2. Also, here, the third transmission path includes a third cooperating gear pair R3, having a primary gear rotatable about the second axis A2 and a secondary gear rotatable about the first axis A1. In this example, the fourth transmission path includes a second freewheel V2 and a fourth cooperating gear pair R4 having a primary gear rotatable about the second axis A2 and a secondary gear rotatable about the first axis A1. Here, each secondary gear of the second transmission 200 is mounted to the crank axle 2. Each primary gear of the second transmission 200 is, here, rotatable about the stationary second axle 48.

The first and second actuatable clutches C1 and C2, can be used to select an appropriate transmission path between the transmission input I and transmission output O. More particular, the first actuatable clutch C1 can be used to selectively switch between the first transmission path and second transmission path of the first transmission 100, and the second actuatable clutch C2 can be used to selectively switch between the third transmission path and fourth transmission path of the second transmission 200.

In this example, an optional third freewheel VB1 is provided in the first transmission path, in series with the first actuatable clutch C1. Similarly, in this example, an optional fourth freewheel VB2 is provided in the third transmission path, in series with the second actuatable clutch C2. In this example, the fourth freewheel VB2 is associated with the first axis A1.

In this example, a first transmission stage is formed by a selective one of the first cooperating gear pair R1 or the second cooperating gear pair R2; a second transmission stage is formed by a selective one of the third cooperating gear pair R3 or the fourth cooperating gear pair R4.

The drive system 1 further comprises, in this example, a planetary third transmission 300 providing a third transmission stage. The planetary third transmission is here associated with the second axis A2. The planetary third transmission 300 comprises a planetary gear set 305 having three rotational members, in particular a ring gear 310, a planet carrier 320 carrying one or more planet gears 330 and a sun gear 340. One of the rotational members is non-rotatably fixed to a stationary part of the drive system 1, here to the stationary axle 48 that extends along the second axis A2. In this example, the sun gear 340 is fixed to the stationary axle 48.

The planetary third transmission 300 comprises in this example a third actuatable clutch C3 and a fourth actuatable clutch C4. Alternatively, the planetary third transmission 300 may comprise either the third actuatable clutch C3 or the fourth actuatable clutch C4. The third actuatable clutch C3 is arranged at an input side of the planetary gear set and the fourth actuatable clutch C4 is arranged at an output side of the planetary gear set. In particular, the third actuatable clutch C3 is arranged in a transmission path between a planetary third transmission input and the planet carrier 320. The fourth actuatable clutch C4 is arranged in a transmission path between the ring gear 310 and a planetary third transmission output. A fifth freewheel V3 is arranged in a transmission path between the planetary third transmission input and ring gear 310. A sixth freewheel V4 is arranged in a transmission path between the planet carrier 320 and the planetary third transmission output. An optional seventh freewheel VB3 is arranged in series with the third actuatable clutch C3. Also, an optional eighty freewheel VB4 is arranged in series with the fourth actuatable clutch C4.

In this example, the transmission system 8 comprises four actuatable clutches, i.e. the first actuatable clutch C1, the second actuatable clutch C2, the third actuatable clutch C3 and the fourth actuatable clutch C4, connected in series. Also in this example, the first actuatable clutch C1, the second actuatable clutch C2, the third actuatable clutch C3 and the fourth actuatable clutch C4 are identical.

Each of the first, second, third and fourth actuatable clutches C1, C2, C3, C4 is configured to be selectively in a closed state or an open state. In the closed state the actuatable clutch couples the clutch input with the clutch output to transmit torque through the clutch, and in the open state decouples the clutch input from the clutch output to transmit no torque through the clutch. Here, the first, second, third and fourth actuatable clutches C1, C2, C3, C4 are identical. Also here, the first, second, third and fourth actuatable clutches C1, C2, C3, C4 are associated with the second axis. Each of the clutches has one or more clutch members being rotatable about the second axis. The first axis has no actuatable clutches associated therewith, and is thus free from actuatable clutches in this example. In this example, each actuatable clutch is a clutch as described in WO2018/199757A2, WO2020/085911A2, or WO2021/080431A1.

In the closed state of the first actuatable clutch C1, torque can be transmitted through the first transmission path from the first transmission input to the first transmission output via the first cooperating gear pair R1. The first freewheel V1 is overrun in the closed state of the first actuatable clutch. The first actuatable clutch C1 in the open state allows torque to be transmitted through the second transmission path from the first transmission input to the first transmission output via the first freewheel and via the second cooperating gear pair R2. Similarly, in the closed state of the second actuatable clutch C2, torque can be transmitted through the third transmission path from the second transmission input to the second transmission output via the third cooperating gear pair R3. The second actuatable clutch C2 in the open state allows torque to be transmitted through the fourth transmission path from the second transmission input to the second transmission output via the second freewheel V2 and via the fourth cooperating gear pair R4.

When the third actuatable clutch C3 is closed, torque can be transmitted from the planetary third transmission input to the planet carrier 320 via the third actuatable clutch C3. The planet carrier can transfer the torque to the ring gear 310, according to a predefined transmission ratio. Hence, the fifth freewheel V3 can be overrun, when the third actuatable clutch C3 is closed. When the third actuatable clutch C3 is open no torque can be transmitted via the third actuatable clutch C3 from the planetary third transmission input 301 to the planet carrier. Instead, when the third actuatable clutch C3 is open, torque can be transmitted from the planetary third transmission input 301 to the ring gear 310, via the fifth freewheel V3.

Further, when the fourth actuatable clutch C4 is closed, torque can be transmitted from the ring gear 310 via the third actuatable clutch C3 to the planetary third transmission output 302. The sixth freewheel V4 can be overrun, when the fourth actuatable clutch C4 is closed. When the fourth actuatable clutch C4 is open no torque can be transmitted via the fourth actuatable clutch C4. Instead, when the fourth actuatable clutch C4 is open, torque can be transmitted from the planet carrier 320, via the sixth freewheel V4 to the planetary third transmission output 302.

The exemplary planetary third transmission 300 is accordingly selectively operable according to three different transmission ratios, here a speed-decreasing transmission ratio, a unitary transmission ratio, and a speed-increasing transmission ratio. The speed-increasing and the speed-decreasing transmission ratios may be inverse to one another. The third transmission stage selectively has one of the different transmission ratios of the third transmission 300.

The drive system 1 further comprises a housing 49. The housing 49 holds the first transmission 100 and the second transmission 200. The housing 49 may furthermore hold any additional transmission that is arranged between the first transmission 100 and second transmission 200, such as in this example the planetary third transmission 300.

Optionally, a rotation axis of the front sprocket is laterally offset relative to an axis of the crank axle. Hence, the rotation axis of the front sprocket and the crank axle can be parallel and not coaxial.

In the examples, the electric motor is concentric with the crank axle. Alternatively, the electric motor can be offset relative to the crank axle.

Optionally, the transmission system includes a continuously variable transmission, CVT. The CVT can be configured to be operated at a plurality of different discrete transmission ratios. Alternatively, or additionally the transmission system can include a belt drive. Alternatively, or additionally, the transmission system can include a planetary gear set.

Optionally, the drive system includes a reduction transmission between the electric motor and the transmission system.

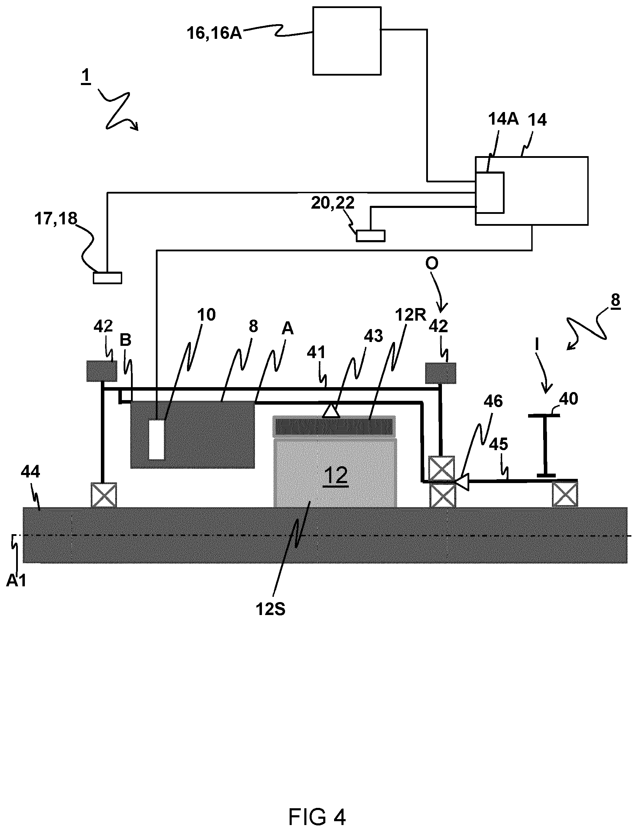

Figure 4 shows an example of a drive system 1 for a human powered vehicle, such as a bicycle. The drive system 1 comprises a sprocket 40 forming an input I of the drive system 1 for receiving human driving force. The sprocket 40 can be a rear sprocket. The sprocket 40 can be part of a plurality of sprockets, e.g. of a cassette. In this example, the sprocket 40 is arranged for receiving a chain 6. Alternatively, the sprocket 40 can be a pulley arranged for receiving a belt, or the sprocket can be arranged for being driven by a cardan drive. Here, the sprocket 4 is mounted to a driver 45. The drive system 1 comprises a hub shell 41 forming an output O of the drive system 1. The hub shell 41 in this example is configured for being mounted to a driven wheel of the vehicle. The hub shell 41 here spokes flanges 42 for mounting the hub shell 41 to a wheel rim via a plurality of spokes.

In this example, the drive system 1 further comprises a transmission system 8 between the input I and the output O. The transmission system 8 has a plurality of different selectable transmission ratios. The transmission system 8 includes one or more clutches 10 for shifting from one of the transmission ratios to another. The sprocket 40 is connected to an input A of the transmission system 8. Here, the driver 45 is connected to the input A of he transmission system 8 via a freewheel 46. An output B of the transmission system is connected to the output O of the drive system. Here to the hub shell 41.

Here, the drive system 1 includes an electric motor 12. In this example, the electric motor is connected to the transmission system 8, here to the input A of the transmission system 8. In this example, a stator 12S of the motor 12 is non-rotatingly connected to a wheel axle 44. In this example, a rotor 12R of the motor 12 is connected to the input A of the transmission system, here via an optional freewheel 43.

The drive system 1 further includes a controller 14. The controller 14 is configured to receive a shift command requesting shifting from one of the transmission ratios to another. The shift command can, e.g. wiredly or wirelessly, be received by a receiver 14A of the controller. The shift command can be transmitted to the controller 14 by a shifter 16. The shifter 16 can e.g. include one or more shift buttons or levers. Optionally, the drive system comprising an automatic shift command generator 16A, configured to automatically generate a shift command and provide the shift command to the controller 14 as described in view of Figure 1.

In this example, the drive system 8 includes a torque sensor 17 and/or a sprocket rotation speed sensor and/or a crank axle rotation speed sensor 18. The controller 14 is configured to receive a signal representative of a torque and/or rotation speed of the sprocket, here from one or both of the sensors 17, 18. The signal representative of a torque and/or rotation speed of the sprocket can include a signal representative of a torque and/or rotation speed of the crank axle. In this example, the controller 14 is configured to, in response to receiving the shift command, when a torque and/or speed of the sprocket 40 is below a predetermined threshold, power the electric motor 12, and control the one or more clutches 10 for shifting from the one of the transmission ratios to the other.

In this example, the controller 14 is configured to receive a signal representative of a speed of the vehicle, here from a wheel speed sensor 20 or vehicle speed sensor 22. The controller 14 is in this example configured to not power the electric motor 12 when the vehicle speed is below a predetermined vehicle speed threshold. Refraining from powering the motor when the vehicle speed is below a predetermined vehicle speed threshold can avoid thrusting the vehicle forward while the rider is not expecting such. The controller 14 can override the instruction to power the electric motor 12 in response to receiving the shift command when a torque and/or speed of the sprocket 40 is below a predetermined threshold in case the vehicle speed is below the predetermined vehicle speed threshold.

Optionally, the controller 14 is configured to control the power to the electric motor during the controlling of the one or more clutches to be at or below a first predetermined power threshold. The first predetermined power threshold can e.g. be 100W or e.g. 50 W, or for example 40, 30, 20 or 10 W. Optionally, the controller 14 is configured to control the power to the electric motor during the controlling of the one or more clutches to be at or above a second predetermined power threshold. The second predetermined power threshold can e.g. be 10 W, or for example 20, 30, 40, 50 or 100 W.

In this example, the electric motor 12 is configured to drive the output O to assist driving force. Here the electric motor 12 drives the output O via the transmission system 8. Here, when the crank axle 2 is driven by the user, the sprocket 40 is driven e.g. by a chain connected to a front sprocket 4 and the rear sprocket 40, and the electric motor 12 drives the output. Here, the controller 14 is configured to maintain power to the electric motor 12, when powered, in response to receiving the shift command, e.g. also when a torque and/or speed of the sprocket 40 is below a predetermined threshold. The controller 14 can be configured to maintain power to the electric motor 12 at the present power level in response to receiving the shift command. The controller 14 can be configured to set power to the electric motor 12 to the first predetermined power threshold in response to receiving the shift command, e.g. when the present power level is higher than the first predetermined power threshold, e.g. when a torque and/or speed of the sprocket 40 is below a predetermined threshold. The controller 14 can be configured to set power to the electric motor 12 to the second predetermined power threshold in response to receiving the shift command, e.g. when the present power level is lower than the second predetermined power threshold, e.g. when a torque and/or speed of the rear sprocket is below a predetermined threshold. The controller 14 can be configured to not raise the power to the electric motor 12 to the second predetermined power threshold when the vehicle speed is below the predetermined vehicle speed threshold.

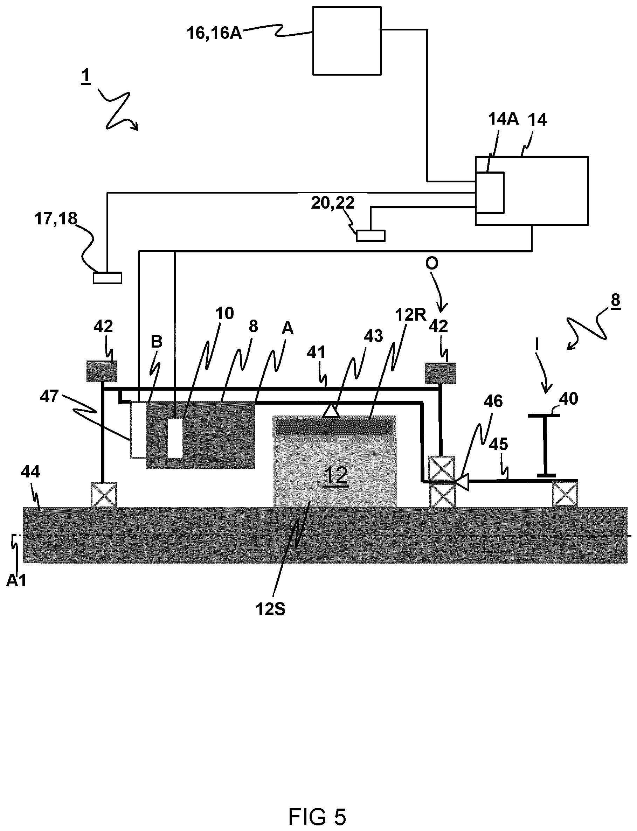

Figure 5 shows an example of a drive system 1 for a human powered vehicle, such as a bicycle, similar to the drive system shown in figure 4. In this example, the drive system comprises a clutch 47 for decoupling the output B of the transmission system 8 from the output O of the drive system. Here, the clutch 47 is configured for decoupling the output B of the transmission system 8 from the hub shell 41. Here, the clutch 47 is configured for decoupling the output B of the transmission system 8 from the wheel. The controller 14 is configured to control the clutch 47 to the decoupled state when powering the electric motor in response to receiving a shift command, when a torque and/or speed of the sprocket 40 is below a predetermined threshold. In particular, the controller 14 can be configured to control the clutch 47 to the decoupled state when powering the electric motor in response to receiving a shift command, when a torque and/or speed of the crank axle is zero or close to zero, e.g. when the vehicle speed is zero or close to zero. The controller 14 can be configured to control the clutch 47 to the coupled state after the shift has been completed. Hence, the clutch 47 can prevent the vehicle being driven by the motor during a shift of the transmission system when the crank axle is not rotating or only rotating very slowly, e.g. when the vehicle is not moving or moving very slowly. Thus shifting can be enabled during standstill or, e.g. slow, coasting. During standstill or coasting the wheel being decoupled from the transmission system may not be noticed by a rider. Once the shift has been completed the wheel is again coupled to the transmission system, ready for use. The controller 14 can be configured to control the clutch 47 to the coupled state when the crank axle rotation speed is higher than a predetermined threshold. Hence, in case the rider starts pedalling with the clutch 47 in the uncoupled state, the controller 14 can switch the clutch 47 to the coupled state so as to provide expected resistance to pedalling to the user.

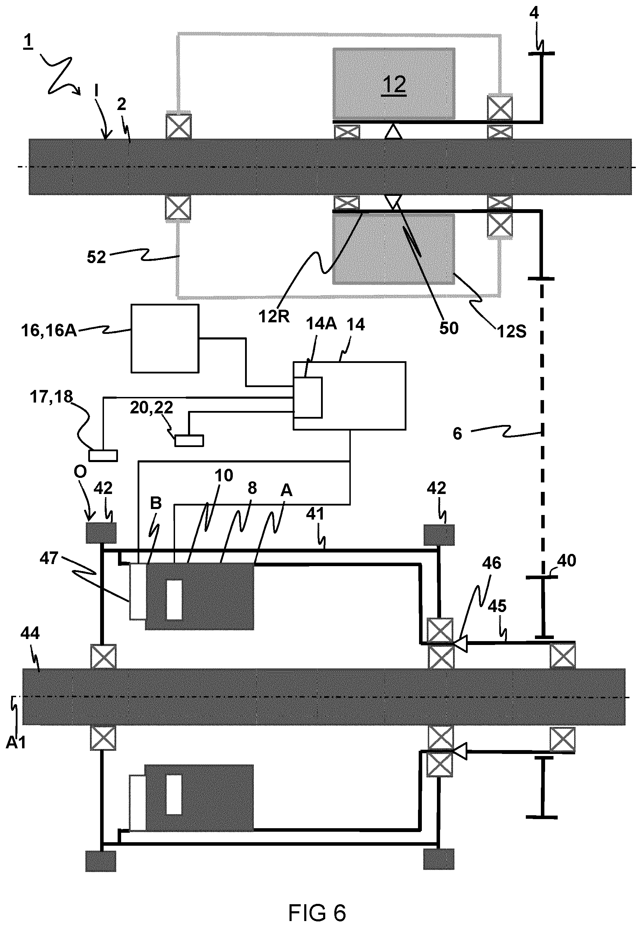

It will be appreciated that the clutch 47 between the output of the transmission system and the output of the drive system can also be applied in the examples of figures 1-3. Then, the clutch 47 can then decouple the output of the transmission system from the front sprocket 4 in a similar way as described in view of figure 5. It will be appreciated that in the example of figures 1-3 the clutch 47 may also be positioned to decouple the output of the transmission system from the wheel. Thereto, the clutch 47 may e.g. be positioned in a wheel hub of the driven wheel, e.g. between the driver and the hub shell. The clutch 47 between the output of the transmission system and the output of the drive system can also be applied in the example of figure 6.

Figure 6 shows an example of a drive system 1 for a human powered vehicle, such as a bicycle. The drive system 1 comprises a crank axle 2 forming an input I of the drive system 1 for receiving human driving force. The drive system 1 comprises a front sprocket 4. In this example, the front sprocket 4 is a chainring arranged for receiving a chain 6. Alternatively, the front sprocket can be a pulley arranged for receiving a belt, or the front sprocket can be arranged for driving a cardan drive.

The drive system 1 further comprises a rear sprocket 40. The rear sprocket 40 is driven by the chain 6 and forms an intermediate input of the drive system. The sprocket 40 can be part of a plurality of sprockets, e.g. of a cassette. Here, the sprocket 4 is mounted to a driver 45. The drive system 1 comprises a hub shell 41 forming an output O of the drive system 1. The hub shell 41 in this example is configured for being mounted to a driven wheel of the vehicle. The hub shell 41 here spokes flanges 42 for mounting the hub shell 41 to a wheel rim via a plurality of spokes.

In this example, the drive system 1 further comprises a transmission system 8 between the input I and the output O. here, the transmission system 8 is housed in the hub shell 41. The transmission system 8 has a plurality of different selectable transmission ratios. The transmission system 8 includes one or more clutches 10 for shifting from one of the transmission ratios to another. The sprocket 40 is connected to an input A of the transmission system 8. Here, the driver 45 is connected to the input A of he transmission system 8 via a freewheel 46. An output B of the transmission system is connected to the output O of the drive system. Here to the hub shell 41.

Here, the drive system 1 includes an electric motor 12. In this example, the electric motor 12 is connected to front sprocket 4. The electric motor can be connected directly to the front sprocket. The electric motor can be connected to the front sprocket via the crank shaft 2. The electric motor can be connected to the front sprocket via a freewheel. In this example, the crank axle 2 is connected to the front sprocket via an optional freewheel 50. Here, the electric motor is housed in a crank housing 52. In this example, a stator 12S of the motor 12 is non-rotatingly connected to the crank housing 52. In this example, a rotor 12R of the motor 12 is connected to the front sprocket 4.

The drive system 1 further includes a controller 14. The controller 14 is configured to receive a shift command requesting shifting from one of the transmission ratios to another. The shift command can, e.g. wiredly or wirelessly, be received by a receiver 14A of the controller. The shift command can be transmitted to the controller 14 by a shifter 16. The shifter 16 can e.g. include one or more shift buttons or levers. Optionally, the drive system comprising an automatic shift command generator 16A, configured to automatically generate a shift command and provide the shift command to the controller 14 as described in view of figure 1.

In this example, the drive system 8 includes a torque sensor 17 and/or a sprocket rotation speed sensor and/or a crank axle rotation speed sensor 18. The controller 14 is configured to receive a signal representative of a torque and/or rotation speed of the rear sprocket 40, here from one or both of the sensors 17, 18. The signal representative of a torque and/or rotation speed of the rear sprocket can include a signal representative of a torque and/or rotation speed of any of the crank axle 2, the front sprocket 4, the chain 6, the driver 45, and/or an axle of the transmission system 8. In this example, the controller 14 is configured to, in response to receiving the shift command, when a torque and/or speed of the rear sprocket 40 is below a predetermined threshold, power the electric motor 12, and control the one or more clutches 10 for shifting from the one of the transmission ratios to the other.

In this example, the controller 14 is configured to receive a signal representative of a speed of the vehicle, here from a wheel speed sensor 20 or vehicle speed sensor 22. The controller 14 is in this example configured to not power the electric motor 12 when the vehicle speed is below a predetermined vehicle speed threshold. Refraining from powering the motor when the vehicle speed is below a predetermined vehicle speed threshold can avoid thrusting the vehicle forward while the rider is not expecting such. The controller 14 can override the instruction to power the electric motor 12 in response to receiving the shift command when a torque and/or speed of the sprocket 40 is below a predetermined threshold in case the vehicle speed is below the predetermined vehicle speed threshold.

Optionally, the controller 14 is configured to control the power to the electric motor during the controlling of the one or more clutches to be at or below a first predetermined power threshold. The first predetermined power threshold can e.g. be 100W or e.g. 50 W, or for example 40, 30, 20 or 10 W. Optionally, the controller 14 is configured to control the power to the electric motor during the controlling of the one or more clutches to be at or above a second predetermined power threshold. The second predetermined power threshold can e.g. be 10 W, or for example 20, 30, 40, 50 or 100 W.

In this example, the electric motor 12 is configured to drive the output O to assist driving force. Here the electric motor 12 drives the output O via the transmission system 8. Here, when the crank axle 2 is driven by the user, the rear sprocket 40 is driven e.g. by a chain connected to a front sprocket 4 and the rear sprocket 40, and the electric motor 12 drives the front sprocket 4. Here, the controller 14 is configured to maintain power to the electric motor 12, when powered, in response to receiving the shift command, e.g. also when a torque and/or speed of the rear sprocket 40 is below a predetermined threshold. The controller 14 can be configured to maintain power to the electric motor 12 at the present power level in response to receiving the shift command. The controller 14 can be configured to set power to the electric motor 12 to the first predetermined power threshold in response to receiving the shift command, e.g. when the present power level is higher than the first predetermined power threshold, e.g. when a torque and/or speed of the rear sprocket 40 is below a predetermined threshold. The controller 14 can be configured to set power to the electric motor 12 to the second predetermined power threshold in response to receiving the shift command, e.g. when the present power level is lower than the second predetermined power threshold, e.g. when a torque and/or speed of the rear sprocket is below a predetermined threshold. The controller 14 can be configured to not raise the power to the electric motor 12 to the second predetermined power threshold when the vehicle speed is below the predetermined vehicle speed threshold.

In general, in particular in view of all the examples, it applies that the controller 14 may be configured to stop powering the electric motor once the shifting has been completed. Thereto, the drive system may include one or more sensors for detecting completion of the shifting. In case the electric motor is used to assist driving force, the controller 14 may be configured to return (or maintain) power to the electric motor to the level prior to shifting.

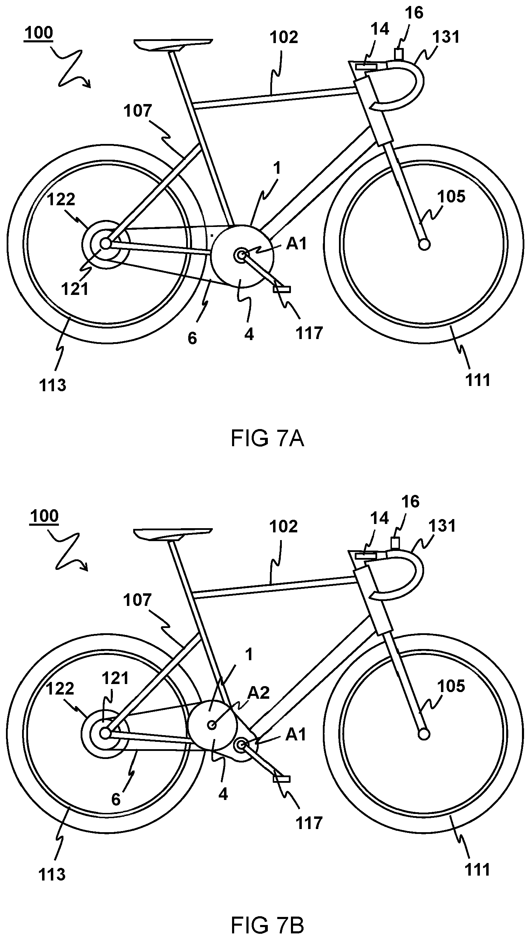

Figures 7A and 7B show a bicycle 100 as an example of a human powered vehicle. The bicycle 100 comprises a frame 102 with a front fork 105 and a rear fork 107, as well as a front wheel and a rear wheel 111, 113 located in the front and rear fork respectively. The bicycle 100 further comprises a crank 117, and a front sprocket 4. The bicycle 100 also comprises a rear sprocket 121, for example one or more rear sprockets such as a cassette. A chain 6 threads over the front sprocket 119 and (any one of) the rear sprocket(s) 121.

In the example of figure 7A, the bicycle comprises a drive system 1 as shown in figures 1, 2, 3, 4, 5 or 6.

In the example of figure 7B, the bicycle comprises a drive system 1 in which a rotation axis of the front sprocket is laterally offset relative to an axis of the crank axle.

The bicycle 100 of figures 7A, 7B also comprises a shifter 16, here connected to handlebars 131. The shifter in this example includes an interface element, such as a button, lever, ring, or the like. The bicycle 100 also includes the controller 14.

Herein, the invention is described with reference to specific examples of embodiments of the invention. It will, however, be evident that various modifications and changes may be made therein, without departing from the scope of the appended claims. For the purpose of clarity and a concise description features are described herein as part of the same or separate embodiments, however, alternative embodiments having combinations of all or some of the features described in these separate embodiments are also envisaged.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A drive system (1) for a human powered vehicle, comprising:
an input (I) of the drive system and an output (O) of the drive system, wherein a crank axle (2) forms the input (I) of the drive system for receiving human driving force and a front sprocket (4) forms the output (O) of the drive system, or a rear sprocket (40) forms the input (I) of the drive system for receiving human driving force and a hub shell (41) forms the output (O) of the drive system;
a transmission system (8) between the input (I) and the output (O), wherein the transmission system (8) has a plurality of different selectable transmission ratios, and includes one or more clutches (10) for shifting from one of the transmission ratios to another;
an electric motor (12), connected to the drive system (1); and
a controller (14) configured to:
receive a shift command requesting shifting from one of the transmission ratios to another,
receive a signal representative of a torque and/or speed of the crank axle (2) or rear sprocket (40);
**characterized in that** the controller (14) is further configured to in response to receiving the shift command, when a torque and/or speed of the input (I) is below a predetermined threshold, power the electric motor (12) to drive the input (I) of the drive system (1) and control the one or more clutches (10) for shifting from the one of the transmission ratios to the other.

2. The drive system (1) of claim 1, wherein the controller (14) is configured to:
receive a signal representative of a speed of the vehicle, and
not power the electric motor (12) when the vehicle speed is below a predetermined vehicle speed threshold.

3. The drive system (1) of claim 1, or 2, wherein the controller (14) is configured to control the power to the electric motor (12) during the controlling of the one or more clutches (10) to be at or below a first predetermined power threshold.

4. The drive system (1) of any of claims 1-3, wherein the controller (14) is configured to control the power to the electric motor (12) during the controlling of the one or more clutches (10) to be at or above a second predetermined power threshold.

5. The drive system (1) of any of claims 1-4, wherein the electric motor (12) is configured to drive the output to assist driving force.

6. The drive system (1) of claim 1-5, wherein the controller (14) is configured to maintain power to the electric motor (12) in response to receiving the shift command.

7. The drive system (1) of claim 3 or any of claims 4-6 as far as dependent from claim 3, wherein the controller (14) is configured to set power to the electric motor (12) to the first predetermined power threshold in response to receiving the shift command when the present power level is higher than the first predetermined power threshold.

8. The drive system (1) of claim 4 or any of claims 5 - 7 as far as dependent from claim 4, wherein the controller (14) is configured to set power to the electric motor (12) to the second predetermined power threshold in response to receiving the shift command when the present power level is lower than the second predetermined power threshold.

9. The drive system (1) of any of claims 1-8, comprising an automatic shift command generator (16A), configured to automatically generate a shift command and provide the shift command to the controller (14).

10. The drive system (1) of any of claims 1-9, comprising a clutch (47) for decoupling an output of the transmission system (8) from a wheel, wherein the controller (14) is configured to decouple the output of the transmission system (8) from the wheel when powering the electric motor (12) in response to receiving a shift command, when a torque and/or speed of the crank axle (2) is below a predetermined threshold.

11. The drive system (1) of any of claims 1-10, wherein the clutches (10) of the transmission system (8) are configured to shift under load.

12. The drive system (1) of any of claims 1-11, including a reduction transmission between the electric motor (12) and the transmission system (8).

13. Crank assembly for a human powered vehicle, comprising the drive system (1) of any of claims 1-12.

14. Hub assembly for a human powered vehicle, comprising the drive system (1) of any of claims 1-12.

15. Human powered vehicle, comprising the drive system (1) of any of claims 1-12, or the crank assembly of claim 13, and/or the hub assembly of claim 14

## Patentansprüche

1. Antriebssystem (1) für ein von Menschen angetriebenes Fahrzeug, welches Folgendes umfasst:
einen Eingang (I) des Antriebssystems und einen Ausgang (O) des Antriebssystems, wobei eine Kurbelachse (2) den Eingang (I) des Antriebssystems zur Aufnahme der menschlichen Antriebskraft und ein vorderes Ritzel (4) den Ausgang (O) des Antriebssystems bildet, oder ein hinteres Ritzel (40) den Eingang (I) des Antriebssystems zur Aufnahme der menschlichen Antriebskraft und ein Nabengehäuse (41) den Ausgang (O) des Antriebssystems bildet;
ein Getriebesystem (8) zwischen dem Eingang (I) und dem Ausgang (O), wobei das Getriebesystem (8) eine Vielzahl von verschiedenen wählbaren Übersetzungsverhältnissen aufweist und eine oder mehrere Kupplungen (10) zum Schalten von einem der Übersetzungsverhältnisse in ein anderes enthält;
einen Elektromotor (12), der mit dem Antriebssystem (1) verbunden ist; und
eine Steuerung (14), die konfiguriert ist, um:
einen Schaltbefehl zu empfangen, der das Umschalten von einem der Übersetzungsverhältnisse auf ein anderes verlangt,
ein Signal zu empfangen, das für ein Drehmoment und/oder eine Geschwindigkeit der Kurbelachse (2) oder des hinteren Ritzels (40) repräsentativ ist,
**dadurch gekennzeichnet, dass** die Steuerung (14) ferner so konfiguriert ist, dass sie als Reaktion auf den Empfang des Schaltbefehls, wenn ein Drehmoment und/oder eine Geschwindigkeit des Eingangs (I) unter einem vorbestimmten Schwellenwert liegt, den Elektromotor (12) mit Energie versorgt, um den Eingang (I) des Antriebssystems (1) anzutreiben und die eine oder mehrere Kupplungen (10) zum Schalten von einem der Übersetzungsverhältnisse in das andere zu steuern.

2. Antriebssystem (1) nach Anspruch 1, wobei die Steuerung (14) konfiguriert ist, um:
ein Signal zu empfangen, das für die Geschwindigkeit des Fahrzeugs repräsentativ ist, und
den Elektromotor (12) nicht anzutreiben, wenn die Fahrzeuggeschwindigkeit unter einem vorbestimmten Schwellenwert für die Fahrzeuggeschwindigkeit liegt.

3. Antriebssystem (1) nach Anspruch 1 oder 2, wobei die Steuerung (14) so konfiguriert ist, dass sie die Leistung des Elektromotors (12) während der Steuerung der einen oder mehreren Kupplungen (10) so steuert, dass sie auf oder unter einem ersten vorgegebenen Leistungsschwellenwert liegt.

4. Antriebssystem (1) nach einem der Ansprüche 1 bis 3, wobei die Steuerung (14) so konfiguriert ist, dass sie die Leistung des Elektromotors (12) während der Steuerung der einen oder mehreren Kupplungen (10) so steuert, dass sie bei oder über einem zweiten vorgegebenen Leistungsschwellenwert liegt.

5. Antriebssystem (1) nach einem der Ansprüche 1 bis 4, wobei der Elektromotor (12) so konfiguriert ist, dass die Abgabe zur Unterstützung der Antriebskraft antreibt.

6. Antriebssystem (1) nach Anspruch 1 bis 5, wobei die Steuerung (14) so konfiguriert ist, dass sie als Reaktion auf den Empfang des Schaltbefehls die Leistung des Elektromotors (12) aufrechterhält.

7. Antriebssystem (1) nach Anspruch 3 oder einem der Ansprüche 4 bis 6, soweit sie von Anspruch 3 abhängen, wobei die Steuerung (14) so konfiguriert ist, dass sie als Reaktion auf den Empfang des Schaltbefehls die Leistung des Elektromotors (12) auf den ersten vorbestimmten Leistungsschwellenwert einstellt, wenn der aktuelle Leistungspegel höher ist als der erste vorbestimmte Leistungsschwellenwert.

8. Antriebssystem (1) nach Anspruch 4 oder einem der Ansprüche 5 bis 7, soweit sie von Anspruch 4 abhängen, wobei die Steuerung (14) so konfiguriert ist, dass sie die Leistung des Elektromotors (12) als Reaktion auf den Empfang des Schaltbefehls auf den zweiten vorbestimmten Leistungsschwellenwert einstellt, wenn der aktuelle Leistungspegel niedriger als der zweite vorbestimmte Leistungsschwellenwert ist.

9. Antriebssystem (1) nach einem der Ansprüche 1 bis 8, das einen automatischen Schaltbefehlsgenerator (16A) umfasst, der so konfiguriert ist, dass er automatisch einen Schaltbefehl erzeugt und den Schaltbefehl an die Steuerung (14) liefert.

10. Antriebssystem (1) nach einem der Ansprüche 1 bis 9, mit einer Kupplung (47) zum Entkoppeln eines Ausgangs des Getriebesystems (8) von einem Rad, wobei die Steuerung (14) so konfiguriert ist, dass sie den Ausgang des Getriebesystems (8) von dem Rad entkoppelt, wenn sie den Elektromotor (12) als Reaktion auf den Empfang eines Schaltbefehls antreibt, wenn ein Drehmoment und/oder eine Drehzahl der Kurbelachse (2) unter einem vorgegebenen Schwellenwert liegt.

11. Antriebssystem (1) nach einem der Ansprüche 1 bis 10, wobei die Kupplungen (10) des Getriebesystems (8) zum Schalten unter Last ausgebildet sind.

12. Antriebssystem (1) nach einem der Ansprüche 1 bis 11, mit einem Untersetzungsgetriebe zwischen dem Elektromotor (12) und dem Getriebesystem (8).

13. Kurbelanordnung für ein von Menschen angetriebenes Fahrzeug, welche das Antriebssystem (1) nach einem der Ansprüche 1 bis 12 umfasst.

14. Nabenanordnung für ein von Menschen angetriebenes Fahrzeug, welche das Antriebssystem (1) nach einem der Ansprüche 1 bis 12 umfasst.

15. Von Menschen angetriebenes Fahrzeug, welches das Antriebssystem (1) nach einem der Ansprüche 1 bis 12 oder die Kurbelanordnung nach Anspruch 13 und/oder die Nabenanordnung nach Anspruch 14 umfasst.

## Revendications

1. Système d'entraînement (1) pour un véhicule à propulsion humaine, comprenant :
une entrée (I) du système d'entraînement et une sortie (O) du système d'entraînement, dans lequel un essieu de manivelle (2) forme l'entrée (I) du système d'entraînement pour recevoir une force motrice humaine, et un pignon avant (4) forme la sortie (O) du système d'entraînement ou un pignon arrière (40) forme l'entrée (I) du système d'entraînement pour recevoir une force motrice humaine et un carter de moyeu (41) forme la sortie (O) du système d'entraînement ;
un système de transmission (8) entre l'entrée (I) et la sortie (O), dans lequel le système de transmission (8) a une pluralité de rapports de transmission sélectionnables différents, et comporte un ou plusieurs embrayages (10) pour passer d'un rapport de transmission à un autre ;
un moteur électrique (12) connecté au système d'entraînement (1) ; et
un contrôleur (14) configuré pour :
recevoir une instruction de changement de vitesse demandant de passer d'un rapport de transmission à un autre,
recevoir un signal représentatif d'un couple et/ou d'une vitesse de l'essieu de manivelle (2) ou du pignon arrière (40) ;
**caractérisé en ce que** le contrôleur (14) est en outre configuré pour, en réponse à la réception de l'instruction de changement de vitesse, lorsqu'un couple et/ou une vitesse de l'entrée (I) sont en dessous d'un seuil prédéterminé, alimenter le moteur électrique (12) pour entraîner l'entrée (I) du système d'entraînement (1) et commander les un ou plusieurs embrayages (10) pour passer d'un des rapports de transmission à l'autre.

2. Système d'entraînement (1) de la revendication 1, dans lequel le contrôleur (14) est configuré pour :
recevoir un signal représentatif d'une vitesse du véhicule, et
ne pas alimenter le moteur électrique (12) lorsque la vitesse de véhicule est en dessous d'un seuil de vitesse de véhicule prédéterminé.

3. Système d'entraînement (1) de la revendication 1 ou 2, dans lequel le contrôleur (14) est configuré pour commander la puissance du moteur électrique (12) pendant la commande des un ou plusieurs embrayages (10) afin qu'elle soit égale ou en dessous d'un premier seuil de puissance prédéterminé.

4. Système d'entraînement (1) de l'une des revendications 1 à 3, dans lequel le contrôleur (14) est configuré pour commander la puissance du moteur électrique (12) pendant la commande des un ou plusieurs embrayages (10) afin qu'elle soit égale ou au-dessus d'un deuxième seuil de puissance prédéterminé.

5. Système d'entraînement (1) de l'une des revendications 1 à 4, dans lequel le moteur électrique (12) est configuré pour entraîner la sortie afin d'assister la force d'entraînement.

6. Système d'entraînement (1) de la revendication 1 à 5, dans lequel le contrôleur (14) est configuré pour maintenir la puissance du moteur électrique (12) en réponse à la réception de l'instruction de changement de vitesse.

7. Système d'entraînement (1) de la revendication 3 ou l'une des revendications 4 à 6 dans la mesure où elles dépendent de la revendication 3, dans lequel le contrôleur (14) est configuré pour régler la puissance du moteur électrique (12) au premier seuil de puissance prédéterminé en réponse à la réception de l'instruction de changement de vitesse lorsque le niveau de puissance actuel est supérieur au premier seuil de puissance prédéterminé.

8. Système d'entraînement (1) de la revendication 4 ou l'une des revendications 5 à 7 dans la mesure où elles dépendent de la revendication 4, dans lequel le contrôleur (14) est configuré pour régler la puissance du moteur électrique (12) au deuxième seuil de puissance prédéterminé en réponse à la réception de l'instruction de changement de vitesse lorsque le niveau de puissance actuel est inférieur au deuxième seuil de puissance prédéterminé.

9. Système d'entraînement (1) de l'une des revendications 1 à 8, comprenant un générateur d'instruction de changement de vitesse automatique (16A), configuré pour générer automatiquement une instruction de changement de vitesse et fournir l'instruction de changement de vitesse au contrôleur (14).

10. Système d'entraînement (1) de l'une des revendications 1 à 9, comprenant un embrayage (47) pour découpler une sortie du système de transmission (8) d'une roue, dans lequel le contrôleur (14) est configuré pour découpler la sortie du système de transmission (8) de la roue lors de l'alimentation du moteur électrique (12) en réponse à la réception d'une instruction de changement de vitesse lorsqu'un couple et/ou une vitesse de l'essieu de manivelle (2) est en dessous d'un seuil prédéterminé.

11. Système d'entraînement (1) de l'une des revendications 1 à 10, dans lequel les embrayages (10) du système de transmission (8) sont configurés pour changer de vitesse sous charge.

12. Système d'entraînement (1) de l'une des revendications 1 à 11, comportant une transmission de réduction entre le moteur électrique (12) et le système de transmission (8).

13. Ensemble manivelle pour un véhicule à propulsion humaine, comprenant le système d'entraînement (1) de l'une des revendications 1 à 12.

14. Ensemble moyeu pour un véhicule à propulsion humaine, comprenant le système d'entraînement (1) de l'une des revendications 1 à 12.

15. Véhicule à propulsion humaine, comprenant le système d'entraînement (1) de l'une des revendications 1 à 12, ou l'ensemble manivelle de la revendication 13, et/ou l'ensemble moyeu de la revendication 14.
